(19) Europäisches Patentamt / European Patent Office / Office européen des brevets

(11) **EP 3 533 773 A1**

(12) **EUROPEAN PATENT APPLICATION**

(43) Date of publication:
04.09.2019 Bulletin 2019/36

(21) Application number: 18305226.5

(22) Date of filing: 02.03.2018

(51) Int Cl.:
*C04B 33/04* (2006.01)    *B32B 18/00* (2006.01)
*C04B 41/87* (2006.01)    *C04B 33/13* (2006.01)
*C04B 33/28* (2006.01)    *C04B 35/622* (2006.01)
*C04B 41/45* (2006.01)    *C04B 41/52* (2006.01)
*C04B 35/626* (2006.01)   *G03F 7/00* (2006.01)
*B28B 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ImerTech**
**75015 Paris (FR)**

(72) Inventors:
• **Gasgnier, Gilles**
**87170 Isle (FR)**
• **Marcillou, Eric**
**41230 Mur de Sologne (FR)**

(74) Representative: **Haseltine Lake Kempner LLP**
**Bürkleinstrasse 10**
**80538 München (DE)**

(54) **3D CERAMIC STRUCTURES**

(57) The present invention relates to a method of forming a 3D ceramic structure by adding a 3D structure with one or more layer(s) of ceramic mixture onto a ceramic substrate. The present invention also relates to a 3D ceramic structure as well as to a green 3D ceramic structure.

Figure 1

**Description**

FIELD OF THE INVENTION

The present invention is directed to a method of forming a 3D ceramic structure by adding a 3D structure with one or more layer(s) of ceramic mixture onto a ceramic substrate. The present invention is also directed to a 3D ceramic structure as well as to a green 3D ceramic structure.

BACKGROUND OF THE INVENTION

Ceramic articles such as tiles, tableware, technical pieces and kiln furniture are widely produced using standard forming processes such as casting, extrusion, pressing and jiggering. A challenge of the standard forming processes described is that incorporating a detailed design as part of the 3D structure may cause difficulties. Even if the required level of detail is possible using the standard forming processes, the process can be labour intensive, time consuming and cost inefficient.

Techniques such as Solid Freeform Fabrication (SFF) allow 3D structures to be created directly from computer models. Such processes include 3D printing, stereolithography (SLA), selective laser sintering (SLS), laminated object manufacturing (LOM), fused deposition modelling (FDM), powder disposition modelling (PDM) and binder jetting. These processes allow material to be added in a controlled way to build up a customised 3D structure. Due to the use of computer models, SFF provides a versatile method of forming 3D structures via the addition of material in a preselected manner.

The addition of ceramic 3D structures on, for example, a cast ceramic substrate poses many challenges, not least the maintenance of the structural integrity of the green 3D structure upon drying and/or firing. It is therefore desirable to develop a method to form 3D ceramic structures that address one or more of the known drawbacks.

SUMMARY OF THE INVENTION

The present invention is defined in the appended claims.

In accordance with a first aspect, there is provided a method of forming a 3D ceramic structure comprising the steps of:

a) providing a green ceramic substrate;
b) adding a 3D structure with one or more layer(s) of ceramic mixture onto the ceramic substrate of step a); and
c) drying and/or firing the product of step b);

wherein the ceramic mixture comprises a ceramic material and one or more solvent(s); and wherein the drying shrinkage of the ceramic mixture is no more than 5% higher and no more than 5% lower than the drying shrinkage of the ceramic substrate.

In accordance with a second aspect, there is provided a 3D ceramic structure obtainable by the method according to the first aspect.

In accordance with a third aspect, there is provided a green 3D ceramic structure comprising one or more layer(s) of ceramic mixture on a ceramic substrate, wherein the ceramic mixture comprises a ceramic material and one or more solvent(s); and wherein the drying shrinkage of the ceramic mixture is no more than 5% higher and no more than 5% lower than the drying shrinkage of the ceramic substrate.

Certain embodiments of the present invention may provide one or more of the following advantages:

- desired structural integrity of the 3D ceramic structure;
- desired adhesion of the added 3D structure to the ceramic substrate;
- desired functionality of the 3D ceramic structure;
- desired flexibility in the design of the 3D ceramic structure;
- desired customisation of the 3D ceramic structure;
- desired flexibility in the ceramic materials used;
- desired cost.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

BRIEF DESCRIPTION OF THE DRAWINGS

The invention will further be illustrated by reference to the following figures:

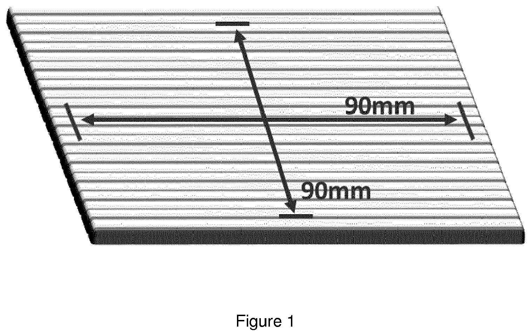

Fig. 1     depicts the formation of the sample to measure drying shrinkage and firing shrinkage.

It is understood that the following description and references to the figures concern exemplary embodiments of the present invention and shall not be limiting the scope of the claims.

DETAILED DESCRIPTION

The present invention is based on a method of forming a ceramic structure comprising adding one or more layer(s) of ceramic mixture onto a ceramic substrate. The drying shrinkage of the ceramic mixture is no more than 5% higher and no more than 5% lower than the drying shrinkage of the ceramic substrate. In certain embodiments the drying shrinkage of the ceramic mixture is no more than 4.5% higher and no more than 4.5% lower than the drying shrinkage of the ceramic substrate, or no more than 4% higher and no more than 4% lower than the drying shrinkage of the ceramic substrate, or no more than 3.5% higher and no more than 3.5% lower than the drying shrinkage of the ceramic substrate, or no more than 3% higher and no more than 3% lower than the drying shrinkage of the ceramic substrate, or no more than 2.5% higher and no more than 2.5% lower than the drying shrinkage of the ceramic substrate, or no more than 2% higher and no more than 2% lower than the drying shrinkage of the ceramic substrate, or no more than 1.5% higher and no more than 1.5% lower than the drying shrinkage of the ceramic substrate or no more than 1% higher and no more than 1% lower than the drying shrinkage of the ceramic substrate, or no more than 0.5% higher and no more than 0.5% lower than the drying shrinkage of the ceramic substrate. Without wishing to be bound by theory, it is thought that, by matching the drying shrinkage of the ceramic mixture and ceramic substrate in this way a stable 3D ceramic structure may be formed.

Drying shrinkage may be defined as the volume reduction that a material suffers as a consequence of drying. The drying shrinkage for a ceramic mixture and ceramic substrate may be measured as described in the following:

*Measuring the drying shrinkage of a ceramic mixture:* A sample of ceramic mixture according to Figure 1 is printed using a 3D printer such as a 3D Delta 4070 (WASP). The extruder of the 3D Delta 4070 (WASP) is equipped with a 0.7 mm nozzle. The sample is printed with a movement of the nozzle in one direction only. Ten successive layers are printed. The sample is measured using a caliper along 2 directions: (x) which is parallel to the nozzle movement during printing and (y) which is perpendicular. The sample is 100 mm x 100 mm in size. Marks are made with a distance of 90 mm in each direction just after the printing. The sample is dried at room temperature overnight, then at 105°C for 2 hours. The distance between the marks is measured again using a caliper along the x-axis to obtain the length in the x direction (Lx), and along the y-axis to obtain the length in the y direction (Ly). The drying shrinkage (R) is the mean value of the percentage shrinkage along the x direction and the percentage shrinkage along y direction.

$$R = (Rx + Ry)/2$$

Rx = (90 - Lx)*100/90 where Lx is the distance between marks along x-axis,
Ry = (90 - Ly)*100/90 where Ly is the distance between marks along y-axis.

*Measuring the drying shrinkage of a ceramic substrate:* After forming a ceramic substrate by casting, extrusion or jiggering, two marks are engraved on the top of a sample. The distance between the two marks is 100 mm, which is determined with a caliper. After drying for 2 hours at 105 °C, the distance between the two marks is measured (Ld) with a caliper and the percentage drying shrinkage (R) is calculated using the following formula:

$$R = (100 - Ld)*100/100$$

For ceramic substrates formed by pressing, the length of the sample coming out of the pressing die (Lp) is measured using a caliper. The sample is dried for 2 hours at 105 °C and the dried length (Lpd) is measured using a caliper. The percentage drying shrinkage (R) is calculated using the following formula:

$$R = (Lp - Lpd)*100/Lp$$

In certain embodiments, the firing shrinkage of the ceramic mixture is no more than 1.5% higher and no more than 1.5% lower than the firing shrinkage of the ceramic substrate, or no more than 1% higher and no more than 1% lower than the firing shrinkage of the ceramic substrate, or no more than 0.5% higher and no more than 0.5% lower than the firing shrinkage of the ceramic substrate.

Firing shrinkage may be defined as the volume reduction that a material suffers as a consequence of firing. The firing shrinkage for a ceramic mixture and ceramic substrate may be measured as described in the following:

_Measuring the firing shrinkage of a ceramic mixture:_ A dried sample according to the method used when determining the drying shrinkage is used and fired to achieve the desired densification rate (dr) for the specific ceramic material and application. For example, a desired densification rate for porcelain is 93 to 96%, for technical ceramics with high mechanical performances is at least 95%, and for cordierite-mullite for kiln furniture is 70%. The densification rate is defined as:

$$dr = BD \times 100 / SD$$

Bulk density (BD) is measured using the well-known Archimedes Method. Samples weighing about 10g were dried in an oven until the mass was constant. The samples were allowed to cool in a desiccator and then weighed ($W_d$). The samples were then put in a chamber under vacuum for 20 minutes. Afterwards, the chamber was filled with water at 20 °C to cover the samples which were then left submersed for 2 hours. The samples were weighed while immersed in water ($W_i$). Afterwards, the excess water was carefully dried off and the samples were immediately weighed ($W_h$). The values of dried weight ($W_d$), immersed weight ($W_i$), humid weight ($W_h$) and the water density ($d_w$) at the measurement temperature were used in order to calculate the bulk density according to the following formula:

$$BD = (W_d \times d_w)/(W_h - W_i)$$

Skeleton density (SD) is either known theoretically (e.g. the SD for alumina is 3.98) or measured. To measure the skeleton density, a sample of fired body weighing 10 g is ground into fine particles (typically 100% < 40 $\mu$m), followed by measuring the density of the obtained powder using a helium pycnometer (AccuPyc II 1340, from Micromeritics).

The following distances are measured using a caliper:

the distance between the marks along x-axis in the dried sample (Ldx);
the distance between the marks along y-axis in the dried sample (Ldy);
the distance between the marks along x-axis in the fired sample (Lfx); and
the distance between the marks along y-axis in the fired sample (Lfy).

The percentage firing shrinkage along the x axis is calculated using the formula:

$$Rfx = (Ldx - Lfx) * 100 / Ldx$$

The percentage firing shrinkage along the y axis is calculated using the formula:

$$Rfy = (Ldy - Lfy) * 100 / Ldy$$

The percentage firing shrinkage of the product is considered as the mean value of Rfx and Rfy and calculated using the formula:

$$Rf = (Rfx + Rfy)/2$$

_Measuring the firing shrinkage of a ceramic substrate:_ For ceramic substrates formed by casting, extrusion or jiggering, a dried sample according to the method used when determining the drying shrinkage is used and fired according to the method described above when measuring the firing shrinkage of a ceramic mixture. The following distances are measured using a caliper:

the distance between marks in dry state onto the sample (Ld); and

the distance between marks in fired state onto the sample (Lf).

The firing shrinkage is calculated using the formula:

$$R=(Ld-Lf)*100/Ld$$

For ceramic substrates formed by pressing, a dried sample according to the method used when determining the drying shrinkage is used and fired according to the method described above when measuring the firing shrinkage of a ceramic mixture. The following distances are measured using a caliper:

the length of the specimen after drying (Lpd); and
the length of the specimen after firing (Lpf).

The firing shrinkage is calculated using the formula:

$$R=(Lpd-Lpf)*100/Lpd$$

In certain embodiments the thermal expansion coefficient of the ceramic mixture is no more than 5% higher and no more than 5% lower than the thermal expansion coefficient of the ceramic substrate, or no more than 4% higher and no more than 4% lower than the thermal expansion coefficient of the ceramic substrate, or no more than 3% higher and no more than 3% lower than the thermal expansion coefficient of the ceramic substrate, or no more than 2% higher and no more than 2% lower than the thermal expansion coefficient of the ceramic substrate, or no more than 1% higher and no more than 1% lower than the thermal expansion coefficient of the ceramic substrate.

The thermal expansion coefficient is measured in accordance with well-known dilatometric method, in which fired samples are heated, at a defined heating rate, inside a dilatometric furnace and the length is measured during the full period of the heat treatment. While the samples length is measured, a thermocouple positioned as close as possible to (but without touching) the sample simultaneously measures the temperature. The dilatation of the sample is determined as a function of the temperature and the thermal expansion coefficient can be calculated in the desired temperature range. The thermal expansion coefficient of each layer of the fired structure is individually measured in a *Netzsch Dil 402 CD* dilatometer using bars of dimensions 40mm x 4mm x 4mm (length x breadth x thickness) in a normal atmosphere (air) without gas flow, between 25°C and 800°C at a heating rate of 5°C/min.

Ceramic Substrate

The ceramic substrate used herein is a green ceramic substrate. The ceramic material for the ceramic substrate may be selected from porcelain, stoneware, vitreous china, earthenware, bone china, cordierite, mullite, steatite, alumina, oxide based ceramics, silicon carbide and carbide based ceramics, nitride based ceramics and combinations thereof. A ceramic mixture may be used to form the ceramic substrate. The ceramic mixture may comprise one or more solvent(s), wherein the solvent(s) may be selected from water and one or more organic solvent(s). The one or more organic solvent may be selected independently from ethanol, methanol, propanol, acetone, methyl ethyl acetone, ethyl acetate, ether, glycol ethers, esters, furfural and glycerol. The ceramic substrate may be formed by casting, extrusion, pressing or jiggering the ceramic mixture. The ceramic substrate may also be formed using Solid Freeform Fabrication.

In certain embodiments the ceramic substrate has a solvent content of from about 1 to about 35 weight percent, or from about 2 to about 33 weight percent, or from about 3 to about 31 weight percent, or from about 4 to about 29 weight percent, or from about 5 to about 27 weight percent, or from about 6 to about 25 weight percent, or from about 7 to about 23 weight percent, or from about 8 to about 21 weight percent, or from about 9 to about 19 weight percent, or from about 10 to about 17 weight percent, or from about 11 to about 15 weight percent, or from about 12 to about 13 weight percent, based on the total weight of the ceramic substrate. The solvent(s) may be present in the ceramic mixture before forming the ceramic substrate and/or added to the ceramic substrate once it has been formed. In certain embodiments the solvent may be water.

The ceramic substrate may have a smooth or rough surface. In certain embodiments the ceramic substrate has a flat or curved surface. Parts of the ceramic surface may be flat whilst other parts may be curved.

In certain embodiments the ceramic substrate may be a ceramic tile, a porcelain plate, a tableware piece, a technical piece or kiln-furniture.

Ceramic Mixture

The ceramic material for the ceramic mixture may be selected from porcelain, stoneware, vitreous china, earthenware, bone china, cordierite, mullite, steatite, alumina, oxide based ceramics, silicon carbide and carbide based ceramics, nitride based ceramics and combinations thereof. In certain embodiments the ceramic mixture comprises ceramic particles with a median particle size $d_{50}$ in the range of about 0.5 $\mu$m to about 500 $\mu$m, or from about 0.75 $\mu$m to about 450 $\mu$m, or from about 1.0 $\mu$m to about 400 $\mu$m, from about 2.0 $\mu$m to about 350 $\mu$m, from about 4.0 $\mu$m to about 300 $\mu$m, from about 5.0 $\mu$m to about 250 $\mu$m, from about 6.0 $\mu$m to about 200 $\mu$m, from about 10 $\mu$m to about 150 $\mu$m, from about 20 $\mu$m to about 100 $\mu$m, from about 30 $\mu$m to about 50 $\mu$m as measured by laser diffraction. One laser diffraction method is wherein a fully dispersed sample in an aqueous medium is measured using a Partica LA-950V2 machine supplied by Horiba. A CILAS 1190LD may also be used in the laser diffraction method.

The ceramic mixture comprises one or more solvent(s). The solvent(s) may be selected from water and/or one or more organic solvent(s). The one or more organic solvent may be selected independently from ethanol, methanol, propanol, acetone, methyl ethyl acetone, ethyl acetate, ether, glycol ethers, esters, furfural and glycerol.

The ceramic mixture may have a solvent content of from about 15 to about 30 weight percent, or from about 17 to about 29 weight percent, or from about 19 to about 28 weight percent, or from about 20 to about 26 weight percent, or from about 22 to about 27 weight percent, based on the total weight of the ceramic mixture.

The ceramic mixture may comprise one or more binders(s). The binder may be selected from polyvinyl alcohol, polyvinylpyrrolidone, polyvinyl butyral, methyl cellulose, hydroxyethyl cellulose, ethyl hydroxyethyl cellulose, hydroxypropylmethyl cellulose, poly(ethylene oxide), polysaccharide, pectin, acrylic resin, homopolymers or copolymers of acrylic sources. The ceramic mixture may have a binder content of from about 0.1 to 10 weight percent, or from about 0.2 to 9.5 weight percent, or from about 0.4 to 9 weight percent, or from about 0.6 to 8.5 weight percent, or from about 0.8 to 8 weight percent, or from about 1 to 7.5 weight percent, or from about 2 to 7 weight percent, or from about 3 to 6 weight percent, or from about 4 to 5 weight percent, based on the total weight of the ceramic mixture.

In certain embodiments the ceramic mixture may further comprise thickeners, lubricants and/or wetting agents. A thickener may be selected from polysaccharides or cellulose derivatives. Lubricants may be selected from polyether or fatty acid preparations. Wetting agents may be selected from cationic, anionic or non-ionic surfactants.

In certain embodiments the ceramic mixture is a ceramic paste. In certain embodiments, the ceramic paste may be a homogenous mixture of ceramic material with one or more solvent(s) and/or one or more binder(s).

In certain embodiments the ceramic paste may have a viscosity of from about 10 Pa.s to about 500 Pa.s, or from about 30 Pa.s to about 450 Pa.s, or from about 50 Pa.s to about 400 Pa.s, or from about 70 Pa.s to about 450 Pa.s, or from about 100 Pa.s to about 400 Pa.s, or from about 130 Pa.s to about 350 Pa.s, or from about 150 Pa.s to about 300 Pa.s, or from about 170 Pa.s to about 250 Pa.s, or from about 190 Pa.s to about 220 Pa.s. Ceramic pastes with low viscosities may be measured using a rotational rheometer, such as a RheolabQC from Anton Paar. Ceramic pastes with high viscosities may be measured using an oscillatory rheometer, such as a Modular Compact Rheometer MCR 302 from Anton Paar.

In certain embodiments the ceramic material may be mixed with one or more solvent(s), and/or one or more binder(s) to form a homogeneous paste before adding onto the green ceramic structure to form a 3D structure. In other embodiments, the ceramic material is placed onto the green ceramic structure as a powder to which one or more solvent(s) and/or one or more binder(s) are added to the ceramic material in a controlled way to form a 3D structure. The ceramic mixture of the latter method may be inhomogeneous meaning that the one or more solvent(s) and/or one or more binder(s) may not be evenly distributed throughout the ceramic mixture. In this sample, the packing density may also vary throughout the mixture.

3D Printing

In certain embodiments, the addition of a 3D structure with one or more layer(s) of ceramic mixture onto the ceramic substrate is carried out by a 3D printing method.

In certain embodiments, the 3D printing method begins with the definition of a three-dimensional geometry using computer-aided design (CAD) software. This CAD data may then be processed with software that slices the model into many thin layers, which are essentially two-dimensional. A physical part may then be created by the successive printing of these layers to recreate the desired geometry.

In one embodiment, the individual layer may be printed by applying a pre-mixed ceramic mixture, which may be extruded onto the ceramic substrate, herein known as microextrusion. Microextrusion covers a number of methods including, but not limited to, PDM (paste deposition modelling), pressure-assisted microsyringe, low-temperature deposition manufacturing, 3D bioplotting, robocasting, direct-write assembly and solvent-based extrusion freeforming. These techniques are the most commonly used additive manufacturing techniques that do not involve melting the material. In addition, this microextrusion is often disclosed in the art as fused deposition modelling (FDM). This use of the term "FDM" is not strictly correct as FDM requires melting of the material, which does not occur in microextrusion methods. However, as part of the present invention, the term microextrusion includes FDM as far as FDM is understood not to involve melting of a material.

In one embodiment an individual layer may be printed by first spreading a thin layer of ceramic material powder and then printing one or more solvent(s) and/or one or more binder(s) to adhere the ceramic material powder together in selected regions to create the desired layer pattern. The growing part may then be lowered by a piston and a new layer of powder is spread on top. This process is repeated until all the layers have been printed. One or more solvent(s) and/or one more binder(s) joins the ceramic material powder together within a layer and between layers. After printing is complete, the unbound ceramic material powder is removed, leaving a part with the desired geometry. This method may be referred to as binder jetting.

In certain embodiments, the ceramic mixture is printed onto the ceramic substrate at a rate of from about 1 to about 100 mm/s, or from about 5 to about 95 mm/s, or from about 10 to about 90 mm/s, or from about 15 to about 85 mm/s, or from about 20 to about 80 mm/s, or from about 25 to about 75 mm/s, or from about 35 to about 70 mm/s, or from about 30 to about 65 mm/s, or from about 35 to about 60 mm/s, or from about 40 to about 55 mm/s, or from about 45 to about 50 mm/s.

In certain embodiments the one or more layer(s) of ceramic mixture is printed onto the ceramic substrate at a thickness of from about 0.1 mm to about 5 mm, or from about 0.2 mm to about 4.8 mm, or from about 0.3 mm to about 4.6 mm, or from about 0.4 mm to about 4.4 mm, or from about 0.5 mm to about 4.2 mm, or from about 0.7 mm to about 4.0 mm, or from about 0.5 mm to about 3.8 mm, or from about 0.7 mm to about 3.6 mm, or from about 0.9 mm to about 3.4 mm, or from about 1.0 mm to about 3.2 mm, or from about 1.2 mm to about 3.0 mm, or from about 1.4 mm to about 2.8 mm, or from about 1.6 mm to about 2.6 mm, or from about 1.8 mm to about 2.4 mm, or from about 2.0 mm to about 2.2 mm.

In certain embodiments the green 3D ceramic structure is dried, dried and sintered, dried and fired, sintered or fired to obtain a 3D ceramic structure.

In certain embodiments, the method of forming the 3D ceramic structure and the 3D ceramic structure may have one or more of the following effects:

- controlled formation;
- detailed formation;
- improved structural integrity, such as a reduction in cracks;
- improved adhesion between the ceramic substrate and ceramic mixture;
- improved resistance to cracking upon drying;
- improved resistance to cracking upon firing;
- efficient method of production;
- flexible method of production; or
- cost effective method of production.

For the avoidance of doubt, the present application is directed to subject-matter described in the following numbered paragraphs.

1. A method of forming a 3D ceramic structure comprising the steps of:

a) providing a green ceramic substrate;
b) adding a 3D structure with one or more layer(s) of ceramic mixture onto the ceramic substrate of step a); and
c) drying and/or firing the product of step b);

wherein the ceramic mixture comprises a ceramic material and one or more solvent(s); and wherein the drying shrinkage of the ceramic mixture is no more than 5% higher and no more than 5% lower than the drying shrinkage of the ceramic substrate.

2. The method of paragraph 1, wherein the firing shrinkage of the ceramic mixture is no more than 1.5% higher and no more than 1.5% lower than the firing shrinkage of the ceramic substrate.

3. The method of paragraph 1 or paragraph 2, wherein the thermal expansion coefficient of the ceramic mixture is no more than 5% higher and no more than 5% lower than the thermal expansion coefficient of the ceramic substrate.

4. The method of any one of the preceding paragraphs, wherein the ceramic material for the ceramic mixture is selected from porcelain, stoneware, vitreous china, earthenware, bone china, cordierite, mullite, steatite, alumina, oxide based ceramics, silicon carbide and carbide based ceramics, nitride based ceramics and combinations thereof.

5. The method of paragraph 4, wherein the ceramic material comprises ceramic particles with a median particle size $d_{50}$ in the range of about 0.5 $\mu$m to about 500 $\mu$m.

6. The method of any one of the preceding paragraphs, wherein the one or more solvent(s) for the ceramic mixture is selected from water and/or one or more organic solvent(s), wherein the one or more organic solvent(s) is selected from ethanol, methanol, propanol, acetone, methyl ethyl acetone, ethyl acetate, ether, glycol ethers, esters, furfural and glycerol.

7. The method of any one of the preceding paragraphs, wherein the ceramic mixture has a solvent content of from about 15 to about 30 weight percent, based on the total weight of the ceramic mixture.

8. The method of any one of the preceding paragraphs, wherein the ceramic mixture comprises a binder.

9. The method of paragraph 8, wherein the binder is selected from polyvinyl alcohol, polyvinylpyrrolidone, polyvinyl butyral, methyl cellulose, hydroxyethyl cellulose, ethyl hydroxyethyl cellulose, hydroxypropylmethyl cellulose, poly(ethylene oxide), polysaccharide, pectin, acrylic resin, homopolymers or copolymers of acrylic sources.

10. The method of paragraph 8 or paragraph 9, wherein the ceramic mixture has a binder content of from about 0.1 to about 10 weight percent, based on the total weight of the ceramic mixture.

11. The method of any one of the preceding paragraphs, wherein the ceramic material further comprises thickeners, lubricants and/or wetting agents.

12. The method of any one of the preceding paragraphs, wherein the ceramic mixture is a ceramic paste.

13. The method of paragraph 12, wherein the viscosity of the ceramic paste is from about 10 Pa.s to about 500 Pa.s.

14. The method of any one of the preceding paragraphs, wherein the ceramic material for the ceramic substrate is selected from porcelain, stoneware, vitreous china, earthenware, bone china, cordierite, mullite, steatite, alumina, oxide based ceramics, silicon carbide and carbide based ceramics, nitride based ceramics and combinations thereof.

15. The method of any one of the preceding paragraphs, wherein the ceramic substrate is cast, extruded, pressed or jiggered.

16. The method of any one of the preceding paragraphs, wherein the ceramic substrate has a solvent content of from about 1 to about 35 weight percent, based on the total weight of the ceramic substrate.

17. The method of paragraph 16, wherein the solvent may be one or more solvent(s) selected from water and/or one or more organic solvent(s), wherein the one or more organic solvent(s) is selected from ethanol, methanol, propanol, acetone, methyl ethyl acetone, ethyl acetate, ether, glycol ethers, esters, furfural and glycerol.

18. The method of any one of the preceding paragraphs, wherein the ceramic substrate has a flat or curved surface.

19. The method of any one of the preceding paragraphs, wherein the ceramic substrate is selected from a ceramic tile, a porcelain plate, a tableware piece, a technical piece and kiln-furniture.

20. The method of any one of the preceding paragraphs, wherein adding a 3D structure with one or more layer(s) of ceramic mixture onto the ceramic substrate is carried out by a 3D printing method.

21. The method of paragraph 20, wherein the 3D printing method is microextrusion or binder jetting.

22. The method of any one of the preceding paragraphs, wherein the ceramic mixture is printed onto the ceramic substrate at a rate of from about 1 to about 100 mm/s.

23. The method of any one of the preceding paragraphs, wherein the one or more layer(s) of ceramic mixture is printed onto the ceramic substrate at a thickness of from about 0.1 mm to about 5 mm.

24. The method of any one of the preceding paragraphs, wherein the ceramic mixture is printed on part of the ceramic substrate to form a 3D-structure.

25. The method according to paragraph 24, wherein the 3D-structure is generated using a CAD model.

26. A 3D ceramic structure obtainable by the method of any one of paragraphs 1 to 25.

27. A green 3D ceramic structure comprising one or more layer(s) of ceramic mixture on a ceramic substrate, wherein the ceramic mixture comprises a ceramic material and one or more solvent(s); and wherein the drying shrinkage of the ceramic mixture is no more than 5% higher and no more than 5% lower than the drying shrinkage of the ceramic substrate.

28. A green 3D ceramic structure of paragraph 27 wherein the firing shrinkage of the ceramic mixture is no more than 1.5% higher and no more than 1.5% lower than the firing shrinkage of the ceramic substrate.

Examples

The ceramic paste and ceramic substrates were made according to the compositions in Table 1.

Ceramic Paste

The ceramic paste was prepared by ball milling the raw material of composition A of Table 1 with water. The slurry was then filtered and pressed to obtain a plastic body with 24.3% of water, which was subsequently de-aired and extruded using a de-airing extruder

Pressed ceramic substrate

The pressed ceramic substrate was prepared by ball milling the raw material of composition B of Table 1 with water. The slurry was then spray dried in order to obtain a powder made of granulates with residual moisture between 2 and 3 %. This powder was then pressed at 300 bars to form the substrate.

Cast ceramic substrate

The cast ceramic substrate was prepared by ball milling the raw material of composition C of Table 1 with water. The slurry was then filter-pressed. The solid obtained from the filter-pressing is used to prepare a slip by adding water and dispersants. The slip is then cast in a plaster mold to form the cast substrate.

Table 1:

| Raw materials | Composition A (%) | Composition 1B (%) | Composition 2B (%) |
|---|---|---|---|
| Ball Clays | 1 | 2 | 6.5 |
| Kaolins | 53.3 | 55.7 | 53.6 |
| Quartz sand | 25.3 | 28.9 | 30.7 |
| Feldspars | 20.4 | 13.4 | 9.2 |

The drying shrinkages and firing shrinkages of each of the compositions A, 1B and 2B were measured as disclosed above and the results are shown in Table 2.

Table 2:

| | A | 1B | A-1B (% difference) | 2B | A-2B (% difference) |
|---|---|---|---|---|---|
| Drying shrinkage (%) | 5.1 | 0 | 5.1 | 3 | 2.1 |
| Firing shrinkage (%) | 9.3 | 11.2 | 1.9 | 9.9 | 0.6 |

Preparation of green 3D structure

The pressed ceramic substrate (1B) and the cast ceramic substrate (2B) were prepared as disclosed above and used for 3D printing immediately after demoulding (before any drying shrinkage occurred). The surface of each of the substrates was slightly wetted with water using a sponge. The ceramic paste (A) was prepared as described above and printed onto each one of the pressed ceramic substrate (1B) and the cast ceramic substrate (2B) using a Delta 4070 3D printer from Wasp with a 1.5 mm nozzle at a speed of 25 mm/s to print 1 to 3 layers each with a thickness of 0.5 mm.

Drying green 3D structure

After printing was complete, the green 3D structure was dried at room temperature for 12 hours, then at 105°C for 3 hours. The samples after drying were inspected by eye and the result of these tests are shown in Table 3.

Table 3:

|  | Paste A on Substrate 1B | Paste A on Substrate 2B |
|---|---|---|
| 1 layer | Insufficient adhesion | Excellent adhesion |
| 3 layers | Peeling occurred | Excellent adhesion |

As seen from Table 3, excellent adhesion was obtained with a 3D structure made from paste A and substrate 2B with both 1 and 3 layers. The 3D structure did not show any cracks. This is an example according to the present invention, wherein the drying shrinkage of 2B is 2.1% lower than the drying shrinkage of the A (see Table 2). The difference in firing shrinkage between A and 2B is 0.6%

As also seen from Table 3, a 3D structure made from paste A and substrate 1B did not perform well, resulting in peeling and insufficient adhesion. In this example the drying shrinkage is mismatched at a difference of 5.1% (see Table 2). The firing shrinkage is also mismatched in this example at a difference of 1.9%.

Firing of dried 3D structure

The dried 3D structures of paste A on substrate 2B obtained using the above method was then fired to 1370 °C at a heating rate of 5°C/min, following by a soaking time of 1 hour at 1370 °C and free cooling. Excellent adhesion was observed in both cases.

Firing was not carried out on the samples for paste A on substrate 1B as the 3D structure after drying exhibited insufficient adhesion or peeling.

**Claims**

1. A method of forming a 3D ceramic structure comprising the steps of:

    a) providing a green ceramic substrate;
    b) adding a 3D structure with one or more layer(s) of ceramic mixture onto the ceramic substrate of step a); and
    c) drying and/or firing the product of step b);

    wherein the ceramic mixture comprises a ceramic material and one or more solvent(s); and wherein the drying shrinkage of the ceramic mixture is no more than 5% higher and no more than 5% lower than the drying shrinkage of the ceramic substrate.

2. The method of claim 1, wherein the firing shrinkage of the ceramic mixture is no more than 1.5% higher and no more than 1.5% lower than the firing shrinkage of the ceramic substrate.

3. The method of claim 1 or claim 2, wherein the thermal expansion coefficient of the ceramic mixture is no more than 5% higher and no more than 5% lower than the thermal expansion coefficient of the ceramic substrate.

4. The method of any one of the preceding claims, wherein the ceramic material for the ceramic mixture is selected from porcelain, stoneware, vitreous china, earthenware, bone china, cordierite, mullite, steatite, alumina, oxide based ceramics, silicon carbide and carbide based ceramics, nitride based ceramics and combinations thereof.

5. The method of claim 4, wherein the ceramic material comprises ceramic particles with a median particle size $d_{50}$ in the range of about 0.5 $\mu$m to about 500 $\mu$m.

6. The method of any one of the preceding claims, wherein the one or more solvent(s) for the ceramic mixture is selected from water and/or one or more organic solvent(s).

7. The method of any one of the preceding claims, wherein the ceramic mixture has a solvent content of from about 15 to about 30 weight percent, based on the total weight of the ceramic mixture.

8. The method of any one of the preceding claims, wherein the ceramic mixture comprises a binder selected from polyvinyl alcohol, polyvinylpyrrolidone, polyvinyl butyral, methyl cellulose, hydroxyethyl cellulose, ethyl hydroxyethyl cellulose, hydroxypropylmethyl cellulose, poly(ethylene oxide), polysaccharide, pectin, acrylic resin, homopolymers or copolymers of acrylic sources, preferably in an amount of about 0.1 to about 10 weight percent, based on the total weight of the ceramic mixture.

9. The method of any one of the preceding claims, wherein the ceramic mixture is a ceramic paste with a viscosity of from about 10 Pa.s to about 500 Pa.s.

10. The method of any one of the preceding claims, wherein the ceramic material for the ceramic substrate is selected from porcelain, stoneware, vitreous china, earthenware, bone china, cordierite, mullite, steatite, alumina, oxide based ceramics, silicon carbide and carbide based ceramics, nitride based ceramics and combinations thereof.

11. The method of any one of the preceding claims, wherein the ceramic substrate is cast, extruded, pressed or jiggered.

12. The method of any one of the preceding claims, wherein the ceramic substrate has a solvent content of from about 1 to about 35 weight percent, based on the total weight of the ceramic substrate, wherein the solvent may be selected from water and/or one or more organic solvent(s).

13. The method of any one of the preceding claims, wherein adding a 3D structure with one or more layer(s) of ceramic mixture onto the ceramic substrate is carried out by a 3D printing method, preferably microextrusion or binder jetting.

14. A 3D ceramic structure obtainable by the method of any one of claims 1 to 13.

15. A green 3D ceramic structure comprising one or more layer(s) of ceramic mixture on a ceramic substrate, wherein the ceramic mixture comprises a ceramic material and one or more solvent(s); and wherein the drying shrinkage of the ceramic mixture is no more than 5% higher and no more than 5% lower than the drying shrinkage of the ceramic substrate.

Figure 1

Europäisches
Patentamt

European
Patent Office

Office européen
des brevets

# EUROPEAN SEARCH REPORT

Application Number

EP 18 30 5226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/028645 A1 (MAGUIRE MICHAEL [US] ET AL) 4 February 2010 (2010-02-04) * paragraphs [0010], [0013], [0015], [0021] - [0033] * ----- | 1-15 | INV. C04B33/04 B32B18/00 C04B41/87 C04B33/13 |
| X | US 5 387 380 A (CIMA MICHAEL [US] ET AL) 7 February 1995 (1995-02-07) * column 2, line 66 - column 3, line 14; claims 1-16 * * column 8, line 60 - line 65 * * column 9, line 7 - line 14 * * column 10, line 4 - line 41 * * column 13, line 9 - line 33 * ----- | 1-15 | C04B33/28 C04B35/622 C04B41/45 C04B41/52 C04B35/626 G03F7/00 B28B1/00 |

| | | | TECHNICAL FIELDS SEARCHED (IPC) |
|---|---|---|---|
| | | | C04B B32B G03F B28B |

The present search report has been drawn up for all claims

| Place of search | Date of completion of the search | Examiner |
|---|---|---|
| Munich | 29 August 2018 | Bonneau, Sébastien |

EPO FORM 1503 03.82 (P04C01)

## ANNEX TO THE EUROPEAN SEARCH REPORT
## ON EUROPEAN PATENT APPLICATION NO.

EP 18 30 5226

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2018

| Patent document cited in search report | | | Publication date | Patent family member(s) | | | Publication date |
|---|---|---|---|---|---|---|---|
| US 2010028645 | A1 | | 04-02-2010 | CA | 2733027 | A1 | 11-02-2010 |
| | | | | EP | 2323822 | A1 | 25-05-2011 |
| | | | | US | 2010028645 | A1 | 04-02-2010 |
| | | | | WO | 2010017182 | A1 | 11-02-2010 |
| US 5387380 | A | | 07-02-1995 | CA | 2136748 | A1 | 23-12-1993 |
| | | | | DE | 69330495 | D1 | 30-08-2001 |
| | | | | DE | 69330495 | T2 | 08-05-2002 |
| | | | | EP | 0644809 | A1 | 29-03-1995 |
| | | | | EP | 1099534 | A2 | 16-05-2001 |
| | | | | JP | 2862674 | B2 | 03-03-1999 |
| | | | | JP | H07507508 | A | 24-08-1995 |
| | | | | US | 5387380 | A | 07-02-1995 |
| | | | | WO | 9325336 | A1 | 23-12-1993 |

EPO FORM P0459

For more details about this annex : see Official Journal of the European Patent Office, No. 12/82